# EUROPEAN PATENT SPECIFICATION

(11) **EP 3 607 625 B1**
(45) Date of publication and mention of the grant of the patent: **11.08.2021**
(21) Application number: 18718530.1
(22) Date of filing: 22.03.2018
(51) Int. Cl.: H02G 3/14

(54) **ELECTRICAL DEVICE WITH UNIFORM BRIGHTNESS**
ELEKTRISCHE VORRICHTUNG MIT GLEICHMÄSSIGER HELLIGKEIT
DISPOSITIF ÉLECTRIQUE À LUMINOSITÉ UNIFORME

(30) Priority: 03.04.2017 IT 201700036456
(43) Date of publication of application: 12.02.2020
(73) Proprietor: Beghelli S.p.A., 40053 Monteveglio-Valsamoggia (BO) (IT)
(72) Inventor: BEGHELLI, Gian Pietro, 40053 Monteveglio-Valsamoggia BO (IT)
(74) Representative: Burchielli, Riccardo
(86) International application number: PCT/IT2018/050048
(87) International publication number: WO 2018/185795

(56) References cited:
- US-A1- 2002 085 370
- US-A1- 2011 228 552
- US-B1- 6 350 039
- US-B1- 7 273 983

## Description

The present invention refers generally to a built-in electrical device with uniform brightness and, more particularly, concerns a new "active" plate, which aims to integrate and enlarge the home automation functions of the electronic devices with which it 's associated and that has the characteristic of being able to be used also as an indoor luminaire, as well as being able to be combined in a universal way to all commercial frames applicable to the so-called "civil series".

The control and actuation electrical devices of the so-called "civil series", meaning with switches, deviators, sockets and other elements of the electrical system, are usually assembled in a modular way on support frames that are fixed to rectangular boxes, most of the time embedded in the walls or mounted on the outside of the walls themselves.

For the correct aesthetic finish and the protection of the internal parts, it is necessary to cover the frame, said "plates", which are suitably shaped to allow access to the switches and to the other devices.

The plates are passive elements made with techno-polymers, various types of metals, wood and/or other materials, and are produced in various forms, thus diversifying with countless aesthetic solutions; in practice, each electrical appliance manufacturer defines its mechanical shapes and detailed dimensions of the devices themselves and, consequently, of the covering plates.

There are no "active" plates currently available, in the sense that the traditional type of plates are limited to covering the fastening elements of electrical appliances and do not integrate control, actuation and signalling devices, in order to integrate the operation of other electronic control devices.

Furthermore, built-in plates that can also be used as indoor luminaire are not yet available on the market.

A built-in electrical device having the features of the preamble of the appended claim 1 is known for example from US6350039B1, US2011/228552A1, US2002/085370A1 and US7273983B1.

The object of the present invention is to provide a built-in electrical device which allows various functions of home automation control and of actuation and that can be usable, at the same time, as an indoor luminaire.

Another object of the invention is to provide a built-in electrical device, which is of universal type and which can, therefore, be combined with any type of support frame of the so-called "civil series".

A further object of the invention is to provide a built-in electric device which is effective, reliable and safe and which has reduced operating costs, with respect to the known art, by virtue of the advantages achieved.

These and other objects, which can be better evaluated in the course of the treatment, are achieved by a built-in electrical with uniform brightness, according to the attached claim 1; other detailed technical features of the electric device object of the present invention are contained in the related dependent claims.

Advantageously, the device according to the invention includes a plate, without display, which uses a uniform lighting system for the brightness of its front surface, capable of synthesizing coloured light of any shade by means of RGB LEDs.

The plate illumination result has both aesthetic and functional purposes, as the aforementioned plate can also signal the state of the device (if connected to other home automation systems of a building) and its functional evolution; in fact, the device can incorporate an electronic circuit with strong functions of interaction with the user and with similar devices installed in a building, so as to integrate and expand the functions of the known type of built-in electrical devices.

Finally, the device has the characteristic of being able to combine in a universal way to all commercial plates, for example, applicable to the civil series of boxes "503", and introduces further functions of "home automation" and "intelligent building".

The same features and functions mentioned are also typical of a built-in home automation fruit consisting of a universal fruit that can be inserted as a control element in all the aforementioned civil series.

Further characteristics and advantages of the present invention will become more evident from the following description, relating to a preferred embodiment of the built-in electrical device, which is the object of the present invention, provided for illustrative and illustrative purposes, but not for limiting purposes, and with the aid of the attached drawings, in which:

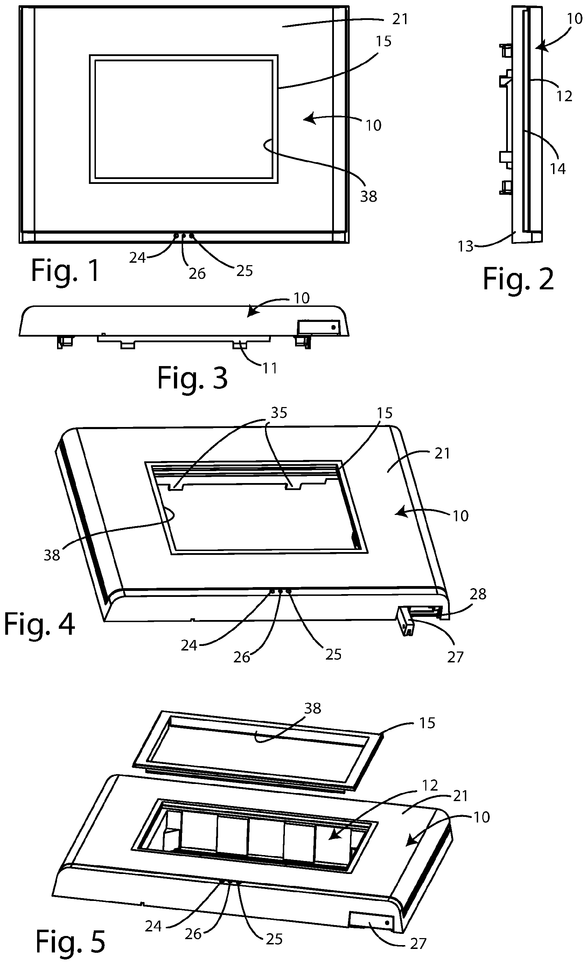

- figure 1 shows a front view of the built-in electrical device with uniform brightness, according to the present invention;
- figure 2 shows a side view of the built-in electrical device, according to the present invention;
- figure 3 shows a bottom view of the built-in electrical device, according to the present invention;
- figure 4 shows a perspective view of the built-in electrical device, according to the present invention;
- figure 5 shows a first exploded view of the built-in electrical device, according to the present invention;

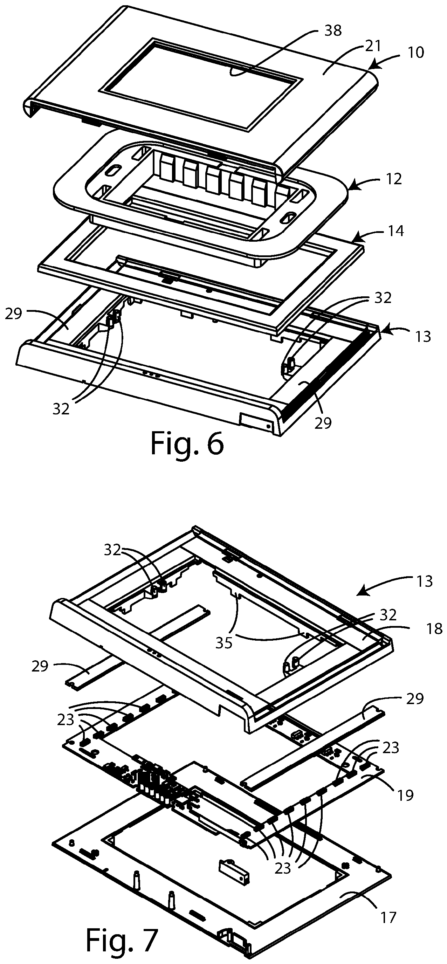

- figure 6 shows a second exploded view of the built-in electrical device, according to the present invention;
- figure 7 shows an exploded view of one of the components of the built-in electrical device of figure 6, according to the present invention;

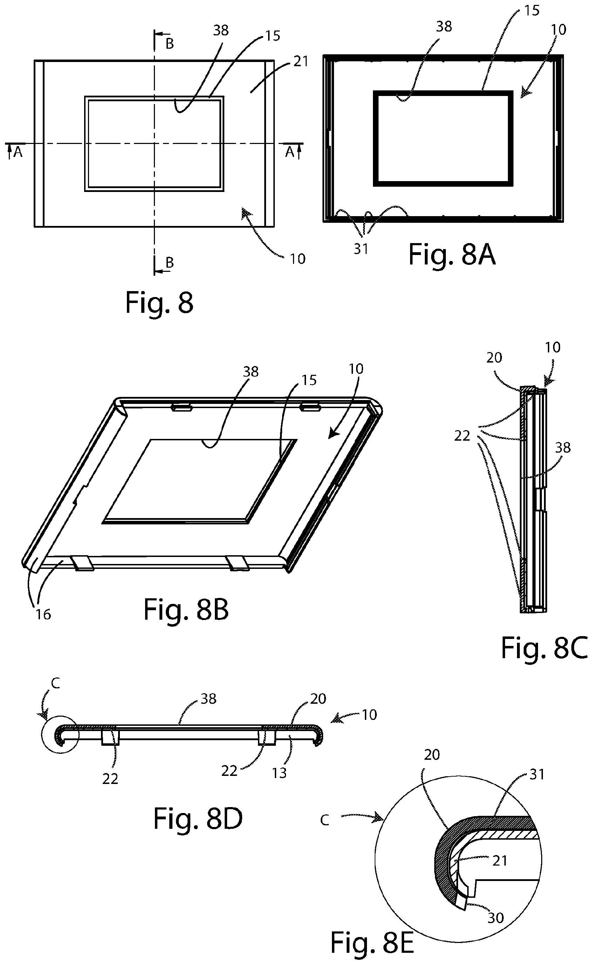

- figure 8 shows a front view of one of the components of the built-in electrical device, according to the present invention;
- figure 8A shows a view from the rear of the component of figure 8, according to the present invention;
- figure 8B shows a perspective view of the component of figure 8, according to the present invention;
- figure 8C shows a sectional view taken along the line B-B of figure 8;
- figure 8D shows a sectional view taken along the line A-A of figure 8;
- figure 8E shows an enlarged view of the technical detail indicated with C in figure 8D, according to the present invention;

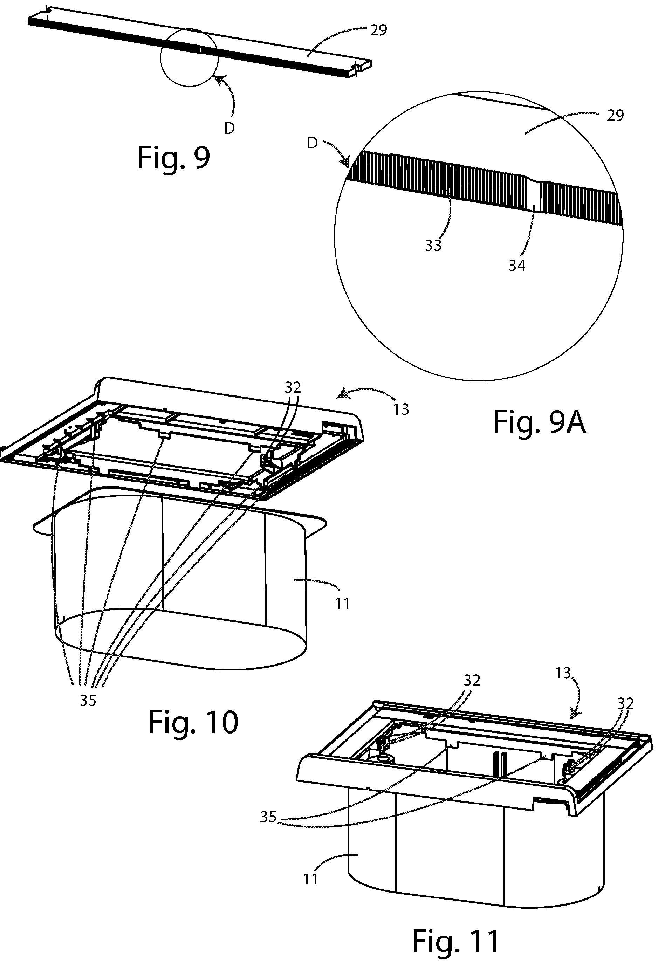

- figure 9 shows a perspective view of an element used in the built-in electrical device, according to the present invention;
- figure 9A shows an enlarged view of the technical detail indicated with D in figure 9, according to the present invention;
- figures 10 and 11 show, respectively, an exploded view and a perspective view of a centring system of the built-in electrical device on a box of the civil series "503" from plasterboard, according to the present invention;

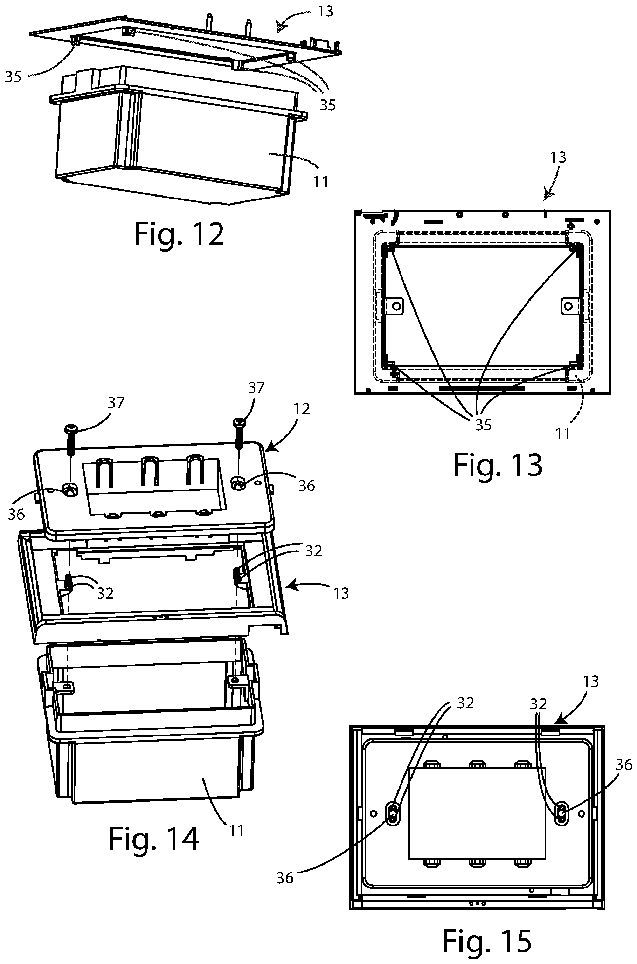

- figures 12 and 13 show, respectively, an exploded view and a front view of a first centring system of the electrical device on a junction box of the civil series "503", according to the present invention;
- figures 14 and 15 show, respectively, an exploded view and a front view of a second centring system of the electrical device on a junction box of the civil series "503", according to the present invention.

With reference to the attached figures, the built-in electrical device, according to the present invention, substantially comprises a front finishing plate 10, coupled to a socket holder frame 12 built-in of commercial series and to a functional frame 13, through the eventual interposition of a spacer 14.

These spacers 14 can be of various heights, in order to compensate for the differences in height that the socket holder frame 12 of some commercial series have with most of the others.

The plate 10 has a compartment or opening 38, preferably central, delimited by a possible inner frame 15, inside which any electrical devices associated with respective control buttons are housed; in particular, the inner frame 15, which is fixed to the plate 10 by means of suitable hooks, allows to dimensionally adapt the central opening 38 for the passage of electrical devices having dimensions typical of the "sockets" of the commercial series.

The device can be applied to a junction box 11 of the so-called "civil series", by means of specific centring systems, which will be described in detail in the following of the discussion.

The plate 10 can integrate, also, a microphone 24, a gas sensor 25, a light sensor 26 (photodiode for the measurement of ambient light) and a room temperature sensor 28 (located in a hinged tray 27 positioned in the part bottom of the outer frame 16), usable for the integration of the device to other home automation systems.

The installation of the room temperature sensor 28 on the hinged tray 27 allows the sensor to correctly measure the temperature of the environment in which it is inserted without being affected by the temperature of the installed electrical device and, in particular, without being influenced by the heat generated inside of the device.

The functional frame 13 is built with techno-polymers and contains internally (on the base 19) a power supply, which converts the AC voltage to 230V of the low voltage electric line for the operation of the plate 10 and of the other electronic circuits, and all the necessary electronic devices necessary to the possible integration with the home automation system of the building, such as an actuation relay for the control of external electric organs, a battery capable of supplying the plate 10 for a few hours in autonomy in the absence of a power supply, a microcontroller for the control and the supervision of the operation of the entire device, a Bluetooth® receiver-transmitter that allows communication with external devices compliant with the standard, a Spread Spectrum DSSS / WIFI receiver-transmitter configurable to implement a communication based on the WiFi standard, an RFID tag with NFC communication suitable for reading and writing from the outside from a smart phone enabled and a plate temperature sensor 10.

The two outer parts 17, 18 of the functional frame 13 are ultrasonically welded together so as to form a single casing which is mechanically resistant and not accessible to the inside by a user.

The device according to the invention also includes an optical unit coupled to the functional frame 13 by means of four pins or hooks 32 and formed by a light guide 20 which covers the upper surface or aesthetic cover 21 and which is made of transparent and diffusing PMMA.

The light guide 20 is permanently coupled (by ultrasonic welding 22) to the upper surface or cover 21 of the plate 10, which, in turn, is made of opaque and colored techno-polymer, so as to give the desired color to the plate 10 when the light guide 20 is not powered and, at the same time, in such a way as to hide the internal technical part of the device from view.

In particular, the light guide 20, transparent and highly diffused, collects the light coming from the RGB LED diodes 23 placed on two opposite sides of the base 19 of the functional frame 13; Specifically, the light emitted by the RGB LEDs 23 is conveyed by respective extensions 29 of light guide, which send it, at the side portions of the plate 10, to the input 30 of the light guide 20.

The extensions 29, being positioned near the RGB 23 emitting LEDs, have the purpose of making the light coming out of the leds 23 as uniform as possible, which is diffused by diffraction also thanks to a particular microstructure 33 made on the lateral surface of the extensions 29, which corresponds to the exit surface of the light; the light is then transferred to the guide 20 on the surface 21 of the plate 10, so that it is evenly distributed and the plate 10 uniformly illuminated.

Thus, the upper surface 21 of the plate 10, collecting the light coming from the two extensions 29, illuminates extremely uniform when the RGB LEDs 23 are on.

The light guide 20 and the upper surface 21 of the plate 10 are facing each other, but not intimately joined, so as not to let the light come out of the contact areas; to this end, point supports 31 have been created between the guide 20 and the surface 21, so as to always leave a space of about 0.10 mm. between the two parts, which are thus in contact only at the point supports 31.

Likewise, there are point supports 34 between each extension 29 and the respective contact surface of the base 19, so as to always leave a space between the parts and maintain contact between the aforesaid parts only at the supports 34, in order to avoid dispersion of light along the respective extensions 29.

As said, the light guide 20, which constitutes the front closing element of the device, is also permanently connected to the underlying surface 21 of the plate 10 by ultrasonic welding 22, at the perimeter of the inner frame 15 and at least two sides of the plate 10, both to create a mechanically coherent structure, and to seal the space between the parts from the entering of dust, which, depositing on the inner surface of the light guide 20, would cause the light radiation to exit from the guide 20, giving place to stains and bright anti-aesthetic spots.

Finally, the functional frame 13 has a series of centring tabs 35, placed perimetrically or angularly in a lower position than the frame 13, which, protruding from the functional frame 13, facilitate centring of the device both on the junction box 11 and on those from plasterboard, simplifying assembly for installers.

Centring pins 32 are also provided, which allow the functional frame 13 to be coupled to the socket holder frame 12.

Moreover, these pins 32, engaging inside the respective slots 36 for fixing, by means of the screws 37, of the socket holder frame 12 to the junction box 11, make the aforementioned functional frame 13 and the socket holder frame 12 integral, leaving however to the latter a small capacity of regulation; the centering pins 32, engaging the two ends of each slot 36, leave the central part free for the passage of the screw 37.

The assembly sequence of the built-in electric device with uniform brightness, according to the present invention, is substantially the following:
- positioning of a power supply module (connected by electric wires to the electronic components contained within the functional frame 13) inside the junction box 11;
- the positioning of the functional frame 13 on the junction box 11, by means of the special centring tabs 35;
- possible positioning of one or more spacers 14 (for commercial series that require it);
- positioning of the socket holder frame 12 on the frame 13, by means of the centring pins 32, and fixing on the junction box 11, by means of the screws 37;
- possible fixing of one or more aesthetic frames 15 on the plate 10, by means of suitable hooks;
- fixing of the plate 10, complete with light guide 20, on the functional frame 13, by means of hooks.

From the above description, the technical characteristics of the in-built electrical device are clear, according to the present invention, just as clear are it's advantages.

The invention is limited only by the appended claims.

## Claims

1. A built-in electrical device with uniform brightness, comprising a plate (10) coupled to a functional frame (13), said plate (10) having a compartment or opening (38), inside which electrical devices associated with respective control buttons are housed, wherein said device includes an optical unit coupled to said functional frame (13) and formed by a light guide (20) which is permanently coupled to an underlying surface (21) of said plate (10), said light guide (20) being configured to collect the light coming from a plurality of LEDs (23) placed on said functional frame (13) which send said light to respective optical elements of extension (29) which are optically coupled to said light guide (20), **characterized in that** said light guide (20) and said underlying surface (21) of the plate (10) are facing each other and spaced from each other and are in contact only in correspondence of point supports (31) placed in predetermined positions.

2. An electrical device according to claim 1, **characterized in that** said optical guide (20) is made from a transparent and diffusing PMMA.

3. An electrical device according to claim 1, **characterized in that** said guide light (20) is coupled to said underlying surface (21) of said plate (10) by means of ultrasonic welding, which are provided in correspondence of at least two sides of said plate (10).

4. An electrical device according to at least one of the preceding claims, **characterized in that** said underlying surface (21) is made of an opaque and coloured polymer, so as to give a desired colour to said plate (10) when said LEDs (23) are off.

5. An electrical device according to at least one of the preceding claims, **characterized in that** said LEDs (23) are placed on two opposite sides of a base (19) of said functional frame (13) and said optical elements of extension (29) are placed laterally to said LEDs (23), so as to send the light to the side portions of said plate (10) and from here to an input (30) of said light guide (20).

6. An electrical device according to at least one of the preceding claims, **characterized in that** said optical elements of extension (29) have a lateral microstructure (33) configured to uniform the light emitted from said LEDs (23), which is diffused through diffraction.

7. An electrical device according to claim 5, **characterized in that** said optical elements of extension (29) are spaced from said base (19) and are in contact with said base (19) only in correspondence of point supports (34).

8. An electrical device according to at least one of the preceding claims, **characterized in that** said plate (10) is coupled to a socket holder frame (12) through the possible interposition of one or more spacers (14).

9. An electrical device according to at least one of the preceding claims, **characterized in that** said functional frame (13) is coupled to a junction box (11) and/or to said socket holder frame (12) by means of centring systems.

10. An electrical device according to at least one of the preceding claims, **characterized in that** said plate (10) incorporates a microphone (24), a gas sensor (25), a light sensor (26) and an ambient temperature sensor (28), which is placed in a hinged tray (27) placed in a lower portion of said plate (10).

11. An electrical device according to at least one of the preceding claims, **characterized in that** said functional frame (13) or said junction box (11) contains a power supply for operating said LEDs (23) and other electronic circuits integrated with home automation systems of a building, such as a relay for controlling external electrical components, a battery, a microcontroller for controlling and managing the whole electrical device, a Bluetooth® transceiver for communicating with external devices, a DSSS/WiFi Spread Spectrum transmitter-receiver configured to implement a communication based on a WiFi standard, an RFID tag with NFC communication for reading and writing from an external enabled smartphone and a temperature sensor of said plate (10).

12. An electrical device according to at least one of the preceding claims, **characterized in that** said functional frame (13) is formed by outer parts (17, 18) which are ultrasonically welded so as to form a single casing with the inside not accessible.

13. An electrical device according to claim 10, **characterized in that** said centering systems comprise a series of tabs (35), which are placed around said functional frame (13) or angularly in a lower position protruding from said functional frame (13), and/or centering pins (32), which are able to couple said functional frame (13) to said socket holder frame (12), said pins (32) engaging within respective slots (36) for fixing, by means of screws (37), said socket holder frame (12) to said junction box (11).

14. An electrical device according to at least one of the preceding claims, **characterized in that** at least an inner frame (15) is placed in correspondence with said opening (38) of the plate (10) and is fixed to said plate (10) by means of first hooks, while said plate (10) together with said light guide (20) is fixed to said functional frame (13) by means of second hooks.

## Patentansprüche

1. Eingebaute elektrische Vorrichtung mit gleichmäßiger Helligkeit, eine Platte (10) umfassend, die mit einem funktionalen Rahmen (13) gekoppelt ist, wobei die Platte (10) ein Fach oder eine Öffnung (38) aufweist, innerhalb derer elektrische Vorrichtungen, die jeweiligen Steuerknöpfen zugeordnet sind, eingehaust sind, wobei die Vorrichtung eine optische Einheit beinhaltet, die mit dem funktionalen Rahmen (13) gekoppelt ist und durch einen Lichtleiter (20) gebildet ist, der permanent an eine zugrundeliegende Oberfläche (21) der Platte (10) gekoppelt ist, wobei der Lichtleiter (20) konfiguriert ist, um das Licht zu sammeln, das aus einer Vielzahl von LEDs (23) kommt, die an dem funktionalen Rahmen (13) platziert sind, der das Licht zu jeweiligen optischen Elementen einer Erweiterung (29) sendet, die optisch mit dem Lichtleiter (20) gekoppelt sind, **dadurch gekennzeichnet, dass** der Lichtleiter (20) und die zugrundeliegende Oberfläche (21) der Platte (10) einander zugewandt sind und voneinander beabstandet sind und nur in Zusammenspiel von Punktstützen (31), die in vorbestimmten Positionen platziert sind, in Kontakt sind.

2. Elektrische Vorrichtung nach Anspruch 1, **dadurch gekennzeichnet, dass** der optische Leiter (20) aus einem transparenten und diffundierenden PMMA gefertigt ist.

3. Elektrische Vorrichtung nach Anspruch 1, **dadurch gekennzeichnet, dass** der Lichtleiter (20) anhand von Ultraschallschweißen mit der zugrundeliegenden Oberfläche (21) der Platte (10) gekoppelt ist, die entlang mindestens zweier Seiten der Platte (10) bereitgestellt werden.

4. Elektrische Vorrichtung nach mindestens einem der vorstehenden Ansprüche, **dadurch gekennzeichnet, dass** die zugrundeliegende Oberfläche (21) aus einem opaken und farbigen Polymer gefertigt ist, um der Platte (10) eine gewünschte Farbe zu verleihen, wenn die LEDs (23) ausgeschaltet sind.

5. Elektrische Vorrichtung nach mindestens einem der vorstehenden Ansprüche, **dadurch gekennzeichnet, dass** die LEDs (23) an zwei gegenüberliegenden Seiten einer Basis (19) des funktionalen Rahmens (13) platziert sind, und die optischen Elemente einer Erweiterung (29) lateral zu den LEDs (23) platziert sind, um das Licht zu den Seitenabschnitten der Platte (10), und von hier zu einem Eingang (30) des Lichtleiters (20) zu senden.

6. Elektrische Vorrichtung nach mindestens einem der vorstehenden Ansprüche, **dadurch gekennzeichnet, dass** die optischen Elemente einer Erweiterung (29) eine laterale Mikrostruktur (33) aufweisen, die konfiguriert ist, um das von den LEDs (23) ausgegebene Licht, das durch Beugung verbreitet wird, zu vereinheitlichen.

7. Elektrische Vorrichtung nach Anspruch 5, **dadurch gekennzeichnet, dass** die optischen Elemente einer Erweiterung (29) von der Basis (19) beabstandet sind, und nur in Zusammenspiel von Punktstützen (34) in Kontakt mit der Basis (19) sind.

8. Elektrische Vorrichtung nach mindestens einem der vorstehenden Ansprüche, **dadurch gekennzeichnet, dass** die Platte (10) durch die mögliche Zwischenlage von einem oder mehreren Abstandhaltern (14) mit einem Buchsenhalterrahmen (12) gekoppelt ist.

9. Elektrische Vorrichtung nach mindestens einem der vorstehenden Ansprüche, **dadurch gekennzeichnet, dass** der funktionale Rahmen (13) anhand von Zentriersystemen mit einer Anschlussdose (11) und/ oder den Buchsenhalterrahmen (12) gekoppelt ist.

10. Elektrische Vorrichtung nach mindestens einem der vorstehenden Ansprüche, **dadurch gekennzeichnet, dass** die Platte (10) ein Mikrofon (24), einen Gassensor (25), einen Lichtsensor (26) und einen Umgebungstemperatursensor (28) einbezieht, der in einer angelenkten Schale (27) platziert ist, die in einem unteren Abschnitt der Platte (10) platziert ist.

11. Elektrische Vorrichtung nach mindestens einem der vorstehenden Ansprüche, **dadurch gekennzeichnet, dass** der funktionale Rahmen (13) oder die Anschlussdose (11) eine Stromversorgung zum Betreiben der LEDs (23) enthält, und andere elektronische Schaltungen, die in Domotiksystemen eines Gebäudes integriert sind, wie ein Relais zum Steuern externer elektrischer Bauteile, eine Batterie, einen Mikrocontroller zum Steuern und Verwalten der gesamten elektrischen Vorrichtung, einen Bluetooth® Sender/Empfänger zum Kommunizieren mit externen Vorrichtungen, einen DSSS/WLAN Spread Spectrum Sender-Empfänger, der konfiguriert ist, um eine Kommunikation basierend auf einem Wi-Fi-Standard einzubeziehen, ein RFID-Tag mit NFC-Kommunikation zum Lesen und Schreiben von einem externen aktivierten Smartphone und einem Temperatursensor der Platte (10).

12. Elektrische Vorrichtung nach mindestens einem der vorstehenden Ansprüche, **dadurch gekennzeichnet, dass** der funktionale Rahmen (13) durch äußere Teile (17, 18) gebildet ist, die ultraschallgeschweißt sind, um ein einzelnes Gehäuse mit der nicht zugänglichen Innenseite zu bilden.

13. Elektrische Vorrichtung nach Anspruch 10, **dadurch gekennzeichnet, dass** die Zentriersysteme eine Reihe von Etiketten (35) umfassen, die um den funktionalen Rahmen (13) herum oder winkelig in einer unteren Position platziert sind, die aus dem funktionalen Rahmen (13) hervorstehen, und/ oder Zentrierstifte (32), die imstande sind, den funktionalen Rahmen (13) mit dem Buchsenhalterrahmen (12) zu koppeln, wobei die Stifte (32) in jeweilige Schlitze (36) zum Fixieren anhand von Schrauben (37) des Buchsenhalterrahmens (12) an der Anschlussdose (11) eingreifen.

14. Elektrische Vorrichtung nach mindestens einem der vorstehenden Ansprüche, **dadurch gekennzeichnet, dass** mindestens ein innerer Rahmen (15) in Zusammenspiel mit der Öffnung (38) der Platte (10) platziert ist, und anhand von ersten Haken an der Platte (10) fixiert ist, während die Platte (10) gemeinsam mit dem Lichtleiter (20) anhand von zweiten Haken an dem funktionalen Rahmen (13) fixiert ist.

## Revendications

1. Dispositif électrique intégré ayant une luminosité uniforme, comprenant une plaque (10) couplée à un cadre fonctionnel (13), ladite plaque (10) présentant un compartiment ou une ouverture (38), à l'intérieur duquel, ou de laquelle, des dispositifs électriques associés à des boutons de commande respectifs sont installés, dans lequel ledit dispositif inclut une unité optique couplée au dit cadre fonctionnel (13) et formée par un guide de lumière (20), qui est couplé de manière permanente à une surface sous-jacente (21) de ladite plaque (10), ledit guide de lumière (20) étant configuré pour collecter la lumière provenant d'une pluralité de DEL (23) placées sur ledit cadre fonctionnel (13), qui envoient ladite lumière à des éléments optiques respectifs d'extension (29) qui sont optiquement couplés au dit guide de lumière (20), **caractérisé en ce que** ledit guide de lumière (20) et ladite surface sous-jacente (21) de la plaque (10) se font face et espacés l'un de l'autre et sont en contact seulement en correspondance de supports ponctuels (31) placés à des positions prédéterminées.

2. Dispositif électrique selon la revendication 1, **caractérisé en ce que** ledit guide optique (20) est constitué de PMMA de diffusion et transparent.

3. Dispositif électrique selon la revendication 1, **caractérisé en ce que** ledit guide de lumière (20) est couplé à ladite surface sous-jacente (21) de ladite plaque (10) au moyen d'un soudage par ultrasons, lesquels sont disposés en correspondance d'au moins deux côtés de ladite plaque (10).

4. Dispositif électrique selon au moins l'une des revendications précédentes, **caractérisé en ce que** ladite surface sous-jacente (21) est constituée d'un polymère opaque et coloré de sorte à donner une couleur souhaitée à ladite plaque (10) lorsque lesdites DEL (23) sont éteintes.

5. Dispositif électrique selon au moins l'une des revendications précédentes, **caractérisé en ce que** lesdites DEL (23) sont placées sur deux côtés opposés d'une base (19) dudit cadre fonctionnel (13) et lesdits éléments optiques d'extension (29) sont placés latéralement par rapport auxdites DEL (23) de sorte à envoyer la lumière aux parties latérales de ladite plaque (10) et, de là, à une entrée (30) dudit guide de lumière (20).

6. Dispositif électrique selon au moins l'une des revendications précédentes, **caractérisé en ce que** lesdits éléments optiques d'extension (29) présentent une microstructure latérale (33) configurée pour uniformiser la lumière émise depuis lesdites DEL (23), qui est diffusée par diffraction.

7. Dispositif électrique selon la revendication 5, **caractérisé en ce que** lesdits éléments optiques d'extension (29) sont espacés de ladite base (19) et sont en contact avec ladite base (19) seulement en correspondance de supports ponctuels (34).

8. Dispositif électrique selon au moins l'une des revendications précédentes, **caractérisé en ce que** ladite plaque (10) est couplée à un cadre de boîtier de douille (12) par l'interposition possible d'une ou de plusieurs entretoises (14).

9. Dispositif électrique selon au moins l'une des revendications précédentes, **caractérisé en ce que** ledit cadre fonctionnel (13) est couplé à une boîte de raccordement (11) et/ou au dit cadre de boîtier de douille (12) au moyen de systèmes de centrage.

10. Dispositif électrique selon au moins l'une des revendications précédentes, **caractérisé en ce que** ladite plaque (10) incorpore un microphone (24), un capteur de gaz (25), un capteur de lumière (26) et un capteur de température ambiante (28), qui est placé sur un plateau à charnières (27) placé dans une partie inférieure de ladite plaque (10).

11. Dispositif électrique selon au moins l'une des revendications précédentes, **caractérisé en ce que** ledit cadre fonctionnel (13) ou ladite boîte de raccordement (11) contient une alimentation électrique pour faire fonctionner lesdites DEL (23) et d'autres circuits électroniques intégrés à des systèmes d'automatisation domestiques d'un bâtiment, tels qu'un relais pour commander des composants électriques externes, une batterie, un microcontrôleur pour commander et gérer tout le dispositif électrique, un émetteur-récepteur Bluetooth pour communiquer avec des dispositifs externes, un émetteur-récepteur à spectre étalé DSSS/Wifi configuré pour mettre en œuvre une communication basée sur une norme Wifi, une étiquette RFID avec une communication NFC pour lire et écrire à partir d'un téléphone intelligent activé et un capteur de température de ladite plaque (10).

12. Dispositif électrique selon au moins l'une des revendications précédentes, **caractérisé en ce que** ledit cadre fonctionnel (13) est formé par d'autres parties (17, 18) qui sont soudées par ultrasons de sorte à former un seul boîtier dont l'intérieur n'est pas accessible.

13. Dispositif électrique selon la revendication 10, **caractérisé en ce que** lesdits systèmes de centrage comprennent une série de languettes (35), qui sont placées autour dudit cadre fonctionnel (13) ou angulairement dans une position plus basse faisant saillie depuis ledit cadre fonctionnel (13), et/ou des broches de centrage (32), qui permettent de coupler ledit cadre fonctionnel (13) au dit cadre de boîtier de douille (12), lesdites broches (32) venant en prise dans des fentes respectives (36) pour fixer, au moyen de vis (37), ledit cadre de boîtier de douille (12) à ladite boîte de raccordement (11).

14. Dispositif électrique selon au moins l'une des revendications précédentes, **caractérisé en ce qu'**au moins un cadre interne (15) est placé en correspondance avec ladite ouverture (38) de la plaque (10) et est fixé à ladite plaque (10) au moyen de premiers crochets tandis que ladite plaque (10) conjointement avec ledit guide de lumière (20) est fixée au dit cadre fonctionnel (13) au moyen de seconds crochets.
